(19) Europäisches Patentamt
European Patent Office
Office européen des brevets

(11) **EP 1 820 987 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(51) Int Cl.:
*F16D 3/02* *(2006.01)*     *B65G 53/46* *(2006.01)*
*F16D 1/10* *(2006.01)*     *F27D 3/00* *(2006.01)*

(21) Anmeldenummer: **07003296.6**

(22) Anmeldetag: **16.02.2007**

(54) **Zellenrad-Schleuse mit Drehmoment-Steck-Kupplung**

Bucket wheel sluice with torque plug-in coupling

Ecluse à roue cellulaire dotée d'un accouplement enfichable à couple moteur

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.02.2006 DE 102006007476**

(43) Veröffentlichungstag der Anmeldung:
**22.08.2007 Patentblatt 2007/34**

(73) Patentinhaber: **Coperion GmbH**
**70469 Stuttgart (DE)**

(72) Erfinder:
• **Schöllhorn, Thomas**
**88410 Hauerz (DE)**

• **Huber, Enver Boris**
**88250 Weingarten (DE)**
• **Zinser, Bruno**
**88289 Waldburg (DE)**
• **Bannat, Nils**
**88348 Bad Saulgau (DE)**

(74) Vertreter: **Rau, Manfred et al**
**Rau, Schneck & Hübner**
**Patentanwälte**
**Königstraße 2**
**90402 Nürnberg (DE)**

(56) Entgegenhaltungen:
DE-A1- 3 418 544     DE-B- 1 099 437
FR-A- 2 321 069     GB-A- 2 260 587
US-A1- 2005 155 467

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Zellenrad-Schleuse nach dem Oberbegriff des Anspruches 1.

Zellenrad-Schleusen der gattungsgemäßen Art sind allgemein bekannt. Nach Öffnen des Deckels oder mit dem Öffnen des Deckels wird bei einer Ausgestaltung der Zellenrad-Schleuse für Schnellreinigung das Zellenrad aus dem Gehäuse herausgezogen und kann gereinigt werden. Gleiches gilt für den an der Welle angebrachten Steck-Zapfen und das Gegenstück hierzu, die Steck-Zapfen-Aufnahme. Der Steck-Zapfen hat üblicherweise ein scharfkantiges Vierkant-Profil oder ein sogenanntes Zwei-Flach-Profil. Letzteres entsteht dadurch, dass von dem kreisrunden Endabschnitt der Welle zwei Segmente weggefräst werden, so dass ein unrunder Steck-Zapfen mit zwei zueinander parallelen Längsseiten und diese verbindenden Teil-Kreis-Abschnitten gebildet wird. Der Nachteil dieser Ausgestaltung ist, dass derartige Ausgestaltungen der Steck-Zapfen und der entsprechend angepassten Steck-Zapfen-Aufnahmen sich nicht zuverlässig hygienisch einwandfrei reinigen lassen und insofern hohen Hygieneanforderungen nicht entsprechen.

Aus der DE 1099 437 B ist eine Zellenrad-Schleuse mit einer einfachen Drehmoment-Steck-Kupplung mit unrundem Querschnitt des Steck-Zapfens und der Steck-Zapfen-Aufnahme bekannt, wobei dies im Einzelnen nicht spezifiziert ist.

Aus der GB 2123 523 A ist eine Steck-Kupplung als Wellenverbindung bekannt, bei der der Steck-Zapfen kreiszylindrischen Querschnitt aufweist, in den drei konkave Ausnehmungen eingefräst sind, wobei der Winkelumfang der stehen gebliebenen zylindrischen Umfangs-Abschnitte und der konkaven Umfangs-Abschnitte etwa gleich ist.

Aus der DE 42 06 222 C2 ist eine Steckkupplung bekannt, bei der der Steck-Zapfen in der Steck-Zapfen-Aufnahme um einen Schwenkwinkel verschwenkbar ist. Die einzelnen einander zugeordneten Flächen sind elliptisch ausgebildet. In der Betriebsstellung findet eine Punkt- bzw. Linienanlage zwischen den einander zugeordneten Flächen des Steck-Zapfens und der Steck-Zapfen-Aufnahme statt.

Der Erfindung liegt daher die Aufgabe zugrunde, eine Zellenrad-Schleuse der gattungsgemäßen Art so auszugestalten, dass bei einfacher Zusammen-Steckbarkeit auch die Drebmoment-Steck-Kupplung hohen Hygiene-Anforderungen genügt, und eine allgemein einsetzbare entsprechende Drehmoment-Steck-Kupplung anzugeben.

Diese Aufgabe wird erfindungsgemäß für eine Zellenrad-Schleuse nach dem Oberbegriff des Anspruches 1 durch die Merkmale im Kennzeichnungsteil des Anspruches 1 gelöst. Der Kern der Erfindung liegt darin, dass die Umfangsfläche der Steck-Zapfen-Aufnahme insgesamt und die Umfangsfläche des Steck-Zapfens zumindestens im Wesentlichen durch Kreisbogen-Abschnitte umgrenzt wird, die sich leicht und gründlich reinigen lassen. Die Steck-Verbindung kann auch dann leicht hergestellt werden, wenn der Steck-Zapfen gegenüber der Steck-Zapfen-Aumahme aus der Mittellage heraus verdreht ist. Dies ist von besonderem Vorteil, da der Bediener die Steck-Zapfen-Aufnahme und den Steck-Zapfen beim Herstellen der Steck-Verbindung nicht sehen kann. Trotzdem wird eine großflächige Anlage der Drehmoment-Übertragungs-Flächen aneinander erreicht.

Bei den angesprochenen Zellenrad-Schleusen kann es sich um jede Art von Zellenrad-Schleusen handeln, also sowohl sogenannte Austrags-Schleusen als auch sogenannte Durchblas-Schleusen.

Durch die Weiterbildung nach Anspruch 2 ist sichergestellt, dass auch an den Übergangsstellen zwischen den einzelnen benachbarten UmfangsAbschnitten keine Knickstellen oder Unstetigkeitsstellen auftreten.

Die Ansprüche 3 bis 7 geben vorteilhafte Einzelheiten der Steck-Zapfen und der Steck-Zapfen-Aufnahmen wieder.

Durch die Weiterbildung nach Anspruch 8 wird sichergestellt, dass auch der Fußbereich des Stock-Zapfens keine schwer zu reinigende Ecke aufweist.

Durch die Weiterbildung nach Anspruch 9 wird erreicht, dass die eigentlichen Traglasten nicht von dem Steck-Zapfen und der Steck-Zapfen-Aufnahme aufgenommen werden müssen, sondern dass diese Lasten in einem benachbarten Abschnitt aufgenommen werden.

Anspruch 10 gibt vorteilhafte Bereiche für den Schwenk-Winkel wieder.

Anspruch 11 gibt wieder, dass die aneinander anliegenden Drehmoment-Übertragungs-Flächen sich über einen größeren Winkel und bevorzugt über einen deutlich größeren Winkel als der Schwenkwinkel erstrekken. Anspruch 12 gibt hierzu noch bevorzugte Maße an.

Weitere Merkmale, Vorteile und Einzelheiten der Erfindung ergeben sich aus der nachfolgenden Beschreibung von Ausfürungsbeispielen anhand der Zeichnung. Es zeigt:

Fig. 1    eine Zellenrad-Schleuse in Seiten-Längs-Ansicht, teilweise aufgebrochen,

Fig. 2    ein Zellenrad der Zellenrad-Schleuse in perspektivischer Darstellung,

Fig. 3    eine Drehmoment-Steck-Kupplung der Zellenrad-Schleuse im Längsschnitt,

Fig. 4    eine erste Ausführungsform eines massiven Kupplungs-Abschnitts für die Drehmoment-Steck-Kupplung in perspektivischer Darstellung,

Fig. 5    einen hohlen Kupplungs-Abschnitt der Drehmoment-Steck-Kupplung im Längsschnitt entsprechend der Schnittlinie, V-V in Fig. 6,

Fig. 6 einen Querschnitt durch den hohlen Kupplungs-Abschnitt gemäß der Schnittlinie VI - VI in Fig. 5,

Fig. 7 einen Querschnitt durch die erste Ausführungsform der Drehmoment-Steck-Kupplung in der Mittellage von Steck-Zapfen und Steck-Zapfen-Aufnahme,

Fig. 8 die Ausgestaltung nach Fig. 7 in einer Drehmoment-Übertragungs-Stellung,

Fig. 9 einen Querschnitt durch eine zweite Ausführungsform der Drehmoment-Steck-Kupplung in der Mittellage von Steck-Zapfen und Steck-Zapfen-Aufnahme,

Fig. 10 die Ausgestaltung nach Fig. 9 in einer Drehmoment-Übertragungs-Stellung,

Fig. 11 einen Querschnitt durch eine dritte Ausführungsform der Drehmoment-Steck-Kupplung in der Mittellage von Steck-Zapfen und Steck-Zapfen-Aufnahme,

Fig. 12 die Ausgestaltung nach Fig. 11 in einer Drehmoment-Übertragungs-Stellung,

Fig. 13 einen Querschnitt durch eine vierte Ausführungsform der Drehmoment-Steck-Kupplung in der Mittellage von Steck-Zapfen und Steck-Zapfen-Aufnahme,

Fig. 14 die Ausgestaltung nach Fig. 13 in einer Drehmoment-Übertragungs-Stellung,

Fig. 15 einen Querschnitt durch eine fünfte Ausführungsform der Drehmoment-Steck-Kupplung in der Mittellage von Steck-Zapfen und Steck-Zapfen-Aufhahme,

Fig. 16 die Ausgestaltung nach Fig. 15 in einer Drehmoment-Übertragungs-Stellung,

Fig. 17 einen Querschnitt durch eine sechste Ausführungsform der Drehmoment-Steck-Kupplung in der Mittellage von Steck-Zapfen und Steck-Zapfen-Aufnahme,

Fig. 18 die Ausgestaltung nach Fig. 16 in einer Drehmoment-Übertragungs-Stellung.

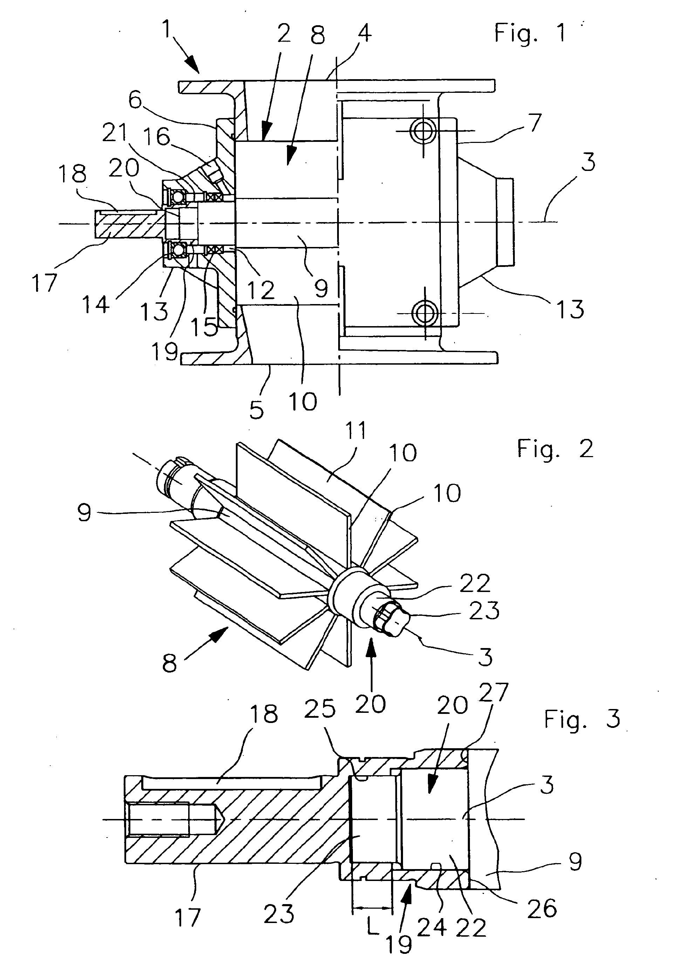

Die in Fig. 1 dargestellte Zellenrad-Schleuse weist ein Gehäuse 1 mit einem im Wesentlichen zylindrischen Innenraum 2 auf. Der Innenraum 2 weist eine horizontale Mittel-Achse 3 auf. In den Innenraum 2 mündet von oben ein Einlass-Stutzen 4 ein und mündet unten ein Auslass-Stutzen 5 aus. Der Innenraum 2 des Gehäuses 1 ist an seinen Stirnseiten offen ausgebildet. Diese Stirnseiten werden durch Deckel 6, 7 abgedeckt, die mittels nicht dargestellter Schrauben am Gehäuse 1 befestigt sind.

Im Innenraum 2 ist konzentrisch zur Mittel-Achse 3 ein Zellenrad 8 angeordnet, an dessen Welle 9 verteilt radial zur Mittel-Achse 3 von ihr abstehende, durch rechteckige Platten gebildete Flügel 10 angebracht sind, die in der Fachwelt auch als Stege bezeichnet werden. Diese Flügel 10 sind in üblicher Weise in gleichen Winkelabständen über den Umfang der Welle 9 verteilt an dieser befestigt, wie insbesondere aus Fig. 2 hervorgeht. Jeweils benachbarte Flügel 10 begrenzen zwischen sich eine Zelle 11.

Die Welle 9 durchsetzt in den Deckeln 6, 7 ausgebildete Lager-Öffnungen 12 und ist in am jeweiligen Deckel 6 bzw. 7 angebrachten Lager-Gehäusen 13 in Wälzlagern 14 gelagert. Außerdem sind zwischen dem jeweiligen Wälzlager 14 und dem Innenraum 2 Dichtungen 15 angeordnet, die zwischen dem jeweiligen Lager-Gehäuse 13 und der Welle 9 wirken. Sie sollen einen Austritt in der Zellenrad-Schleuse befindlichen Gases verhindern. Zwischen den Dichtungen 15 und dem Innenraum 2 mündet noch ein Spülluft-Anschluss 16 in die jeweilige Lager-Öffnung 12, mittels dessen auch aus dem Innenraum 2 austretendes Produkt in den Innenraum 2 zurückgeblasen werden kann.

Der Drehantrieb des Zellenrades 8 erfolgt über einen Antriebs-Zapfen 17, der zur drehfesten Anbringung eines Aufsteck-Getriebes oder Zahnrades, des Kettenrades einer Rollenkette oder dergleichen eine Nut 18 aufweist und als Drehantriebs-Einrichtung dient. Der Antriebs-Zapfen 17 weist einen im Lager-Gehäuse 13 des Deckels 6 befindlichen hohlen ersten Kupplungs-Abschnitt 19 auf, der über das Wälzlager 14 im Lager-Gehäuse 13 radial abgestützt und axial festgelegt aber frei drehbar gelagert ist.

An der Welle 9 ist ein massiver zweiter Kupplungs-Abschnitt 20 einstückig ausgebildet, der in den ersten Kupplungs-Abschnitt 19 einführbar und mit diesem drehfest kuppelbar ist. Die beiden Kupplungs-Abschnitte 19, 20 bilden also eine Drehmoment-Steck-Kupplung 21.

In seinem Grundaufbau weist der zweite Kupplungs-Abschnitt 20 einen zylindrischen Führungs-Abschnitt 22 und von diesem frei vorstehend einen Steck-Zapfen 23 mit unrundem Querschnitt auf. Entsprechend weist der erste Kupplungs-Abschnitt 19 an seinem dem Zellenrad 8 zugewandten offenen Ende eine zylindrische Aufnahme 24 für den zylindrischen Führungs-Abschnitt 22 und hieran anschließend eine Steck-Zapfen-Aufnahme 25 auf. Der Führungs-Abschnitt 22 und die Aufnahme 24 dienen zur Aufnahme der Traglasten, haben also ein sehr geringes radiales Spiel. Zwischen dem Steck-Zapfen 23 und der Steck-Zapfen-Aufnahme 25 wird eine Drehmomentenverbindung zwischen Antriebs-Zapfen 17 und Zellenrad 8 gebildet, wie in Fig. 3 angedeutet ist.

Der stirnseitige Bund 26 der Welle 9 am Übergang zum zylindrischen Führungs-Abschnitt 22 kann nach dem Einführen des zweiten Kupplungs-Abschnitts 20 in den ersten Kupplungs-Abschnitt 19 an der Stirnseite 27 des hohlen ersten Kupplungs-Abschnitts 19 anliegen, wodurch eine axiale Festlegung zwischen Antriebs-Zapfen 17 und Zellenrad 8 gebildet wird. Alternativ kann das Zellenrad 8 auch in dem Lager im Deckel 7 axial festgelegt sein; in diesem Fall befindet sich zwischen dem stirnseitigen Bund 26 und der Stirnseite 27 ein schmaler Spalt, in dem thermische Ausdehnungen des Zellenrades 8, d. h. insbesondere der Welle 9, aufgenommen werden.

Bei der nachfolgenden Beschreibung von sechs Ausführungsbeispielen werden jeweils vergleichbare, aber leicht unterschiedlich gestaltete Teile bzw. Flächen mit denselben Bezugsziffern und einem dem Ausführungsbeispiel entsprechenden Index 1, 2, 3 ... bezeichnet.

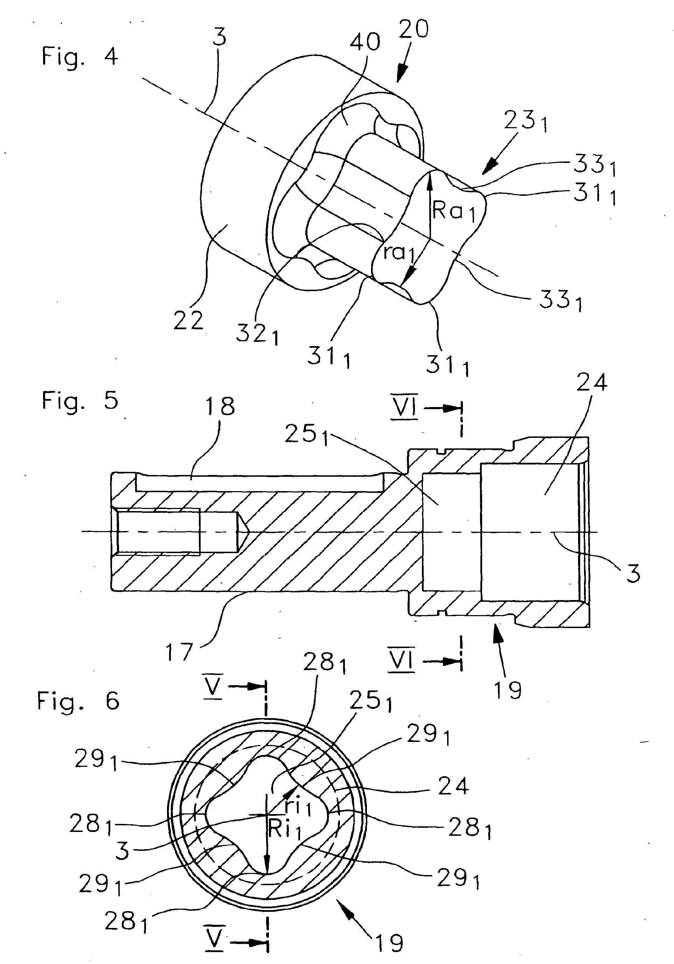

Wie aus den Fig. 4 bis 6 und insbesondere 7 und 8 hervorgeht, kann die Steck-Zapfen-Aufnahme $25_1$ einen Querschnitt etwa eines mathematischen Pluszeichens oder eines gleichschenkligen rechtwinkligen Kreuzes aufweisen, das durch vier konkave teilzylindrische Umfangs-Abschnitte $28_1$ mit begrenzt wird, die durch jeweils vier konvexe Umfangs-Abschnitte $29_1$ miteinander verbunden sind. Im Bereich der konkaven Umfangs-Abschnitte $28_1$ weist die Steck-Zapfen-Aufnahme $25_1$ also jeweils ihren größten Innenradius $Ri_1$ auf, während sie im Bereich der konvexen Umfangs-Abschnitte $29_1$ ihren kleinsten Innenradius $ri_1$ aufweist. Die konkaven Umfangs-Abschnitte $28_1$ und die konvexen Umfangs-Abschnitte $29_1$ gehen jeweils stetig, also ohne Knickstelle, ineinander über.

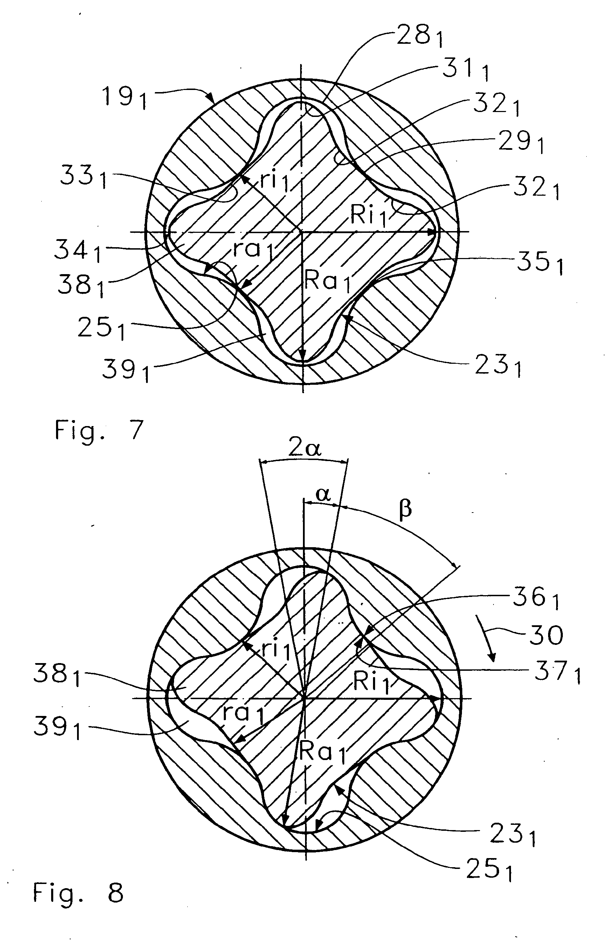

Gemäß den Fig. 7 und 8 weist der Steck-Zapfen $23_1$ einen dem Querschnitt der Steck-Zapfen-Aufnahme $25_1$ insoweit eingepassten Querschnitt auf, dass der Steck-Zapfen $23_1$ und die Steck-Zapfen-Aufnahme $25_1$ aus ihrer in Fig. 7 dargestellten Mittellage ein Dreh-Spiel bzw. ein tangentiales Spiel um jeweils einen Winkel $\alpha$, insgesamt also um einen Winkel $2\alpha$ haben. Die Oberflächenkontur des Steck-Zapfens $23_1$ ist so ausgebildet, dass er beim Drehantrieb in Drehrichtung 30, also in Umfangsrichtung, flächig an dem Umfangs-Abschnitt $28_1$, $29_1$ der Steck-Zapfen-Aufnahme $25_1$ anliegt. Um dies zu ermöglichen, wird er im Bereich seines größten Radius $Ra_1$ durch im Wesentlichen konvexe Umfangs-Abschnitte $31_1$ begrenzt, die über verhältnismäßig kurze konkave Umfangs-Abschnitte $32_1$ jeweils in einen diese verbindenden geradlinigen Umfangs-Abschnitt $33_1$ übergehen. Die Umfangs-Abschnitte $32_1$ und $33_1$ bilden zusammen jeweils Umfangs-Verbindungs-Abschnitte.

Ein normal auf den Umfangs-Abschnitt $33_1$ gerichteter Radius $ra_1$ bildet den kleinsten Radius. Wie insbesondere Fig. 7 erkennen lässt, ist $Ra_1$ geringfügig kleiner als $Ri_1$ und $ra_1$ geringfügig kleiner als $ri_1$. Hier ist die Differenz von $Ri_1$ und $Ra_1$ größer als die Differenz von $ri_1$ und $ra_1$, d. h. der Spalt $34_1$ zwischen dem konkaven Umfangs-Abschnitt $28_1$ und dem konvexen Umfangs-

Abschnitt $31_1$ ist in der in Fig. 7 dargestellten Mittellage größer als der Spalt $35_1$ zwischen dem konvexen Umfangs-Abschnitt $29_1$ und dem geradlinigen Umfangs-Abschnitt $33_1$. Wie Fig. 8 entnehmbar ist, erstrecken sich die einander entsprechenden und aneinander anliegenden Drehmoment-Übertragungs-Flächen $36_1$ und $37_1$ an der Steck-Zapfen-Aufnahme $25_1$ bzw. am Steck-Zapfen $23_1$ über einen Bereich, der definiert ist durch die Zahl der zuvor jeweils definierten Vorsprünge $38_1$ des Steck-Zapfens $23_1$ und den Winkel $\alpha$. Wenn die Zahl der Vorsprünge $38_1$ bzw. der zugehörigen Ausnehmungen $39_1$ gleich n ist, im vorliegenden Ausführungsbeispiel also n = 4 ist, dann gilt für den Gesamtwinkel $n\beta$, in dem Drehmoment-Übertragungs-Flächen $36_1$ an Drehmoment-Übertragungs-Flächen $37_1$ anliegen:

$$n\beta \leq 180° - n\alpha,$$

wobei $\beta$ der Drehmoment-Übertragungs-Winkel ist, um den jeweils eine Drehmoment-Übertragungs-Fläche $36_1$ an einer zugeordneten Drehmoment-Übertragungs-Fläche $37_1$ anliegt. Die Vorsprünge $38_1$ und entsprechend die Ausnehmungen $39_1$ sind in gleichen Winkelabständen $360°/n$ angeordnet.

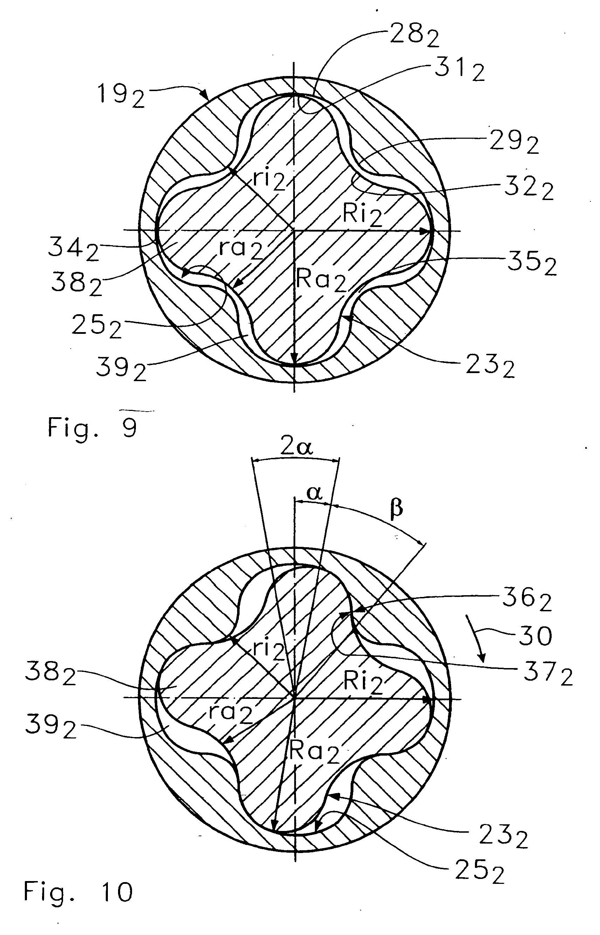

Eine leicht abgewandelte Ausgestaltung ergibt sich aus den Fig. 9 und 10. Hierbei sind die konkaven Umfangs-Abschnitte $28_2$ und die konvexen Umfangs-Abschnitte $29_2$ der Steck-Zapfen-Aufnahme $25_2$ jeweils schwächer gekrümmt als bei der Ausgestaltung nach den Fig. 7 und 8. Entsprechend sind die konvexen Umfangs-Abschnitte $31_2$ und die konkaven Umfangs-Abschnitte $32_2$ des Steck-Zapfens $23_2$ jeweils schwächer gekrümmt als beim Ausführungsbeispiel nach den Fig. 7 und 8, wobei zwischen zwei benachbarten konvexen Umfangs-Abschnitten $31_2$ nur ein diese verbindender konkaver Umfangs-Abschnitt $32_2$ ausgebildet ist; der geradlinige Umfangs-Abschnitt ist also entfallen. Auch hier gehen die einzelnen Umfangs-Abschnitte - gleichermaßen wie beim Ausführungsbeispiel nach den Fig. 7 und 8 - stetig, also ohne Knickstellen, ineinander über. In diesem Fall gilt, dass der Spalt $34_2$ in der Ausgangs-Mittellage gemäß Fig. 9 deutlich kleiner ist als der Spalt $35_2$.

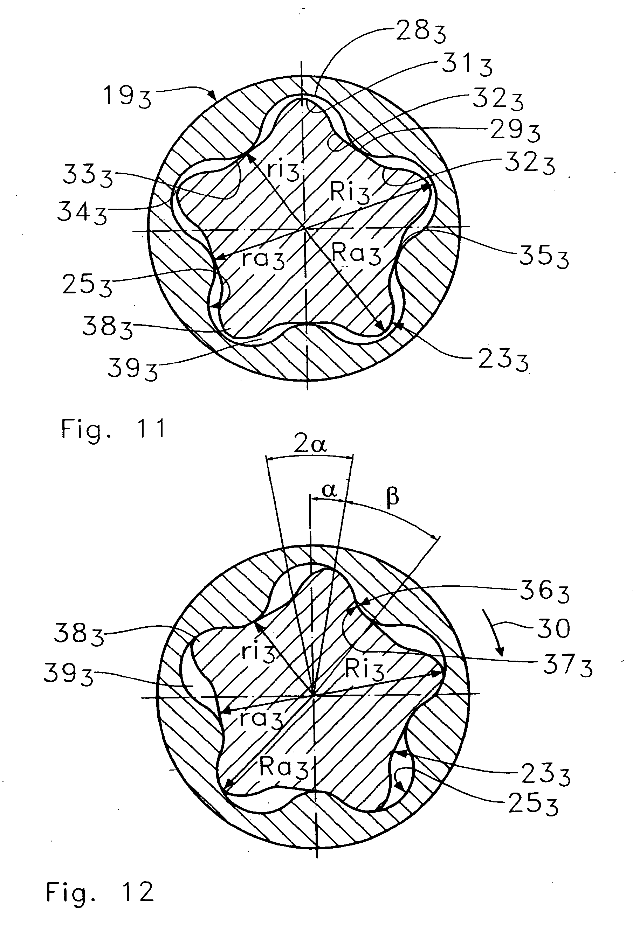

In den Fig. 11 und 12 ist eine Ausführung dargestellt, in der der Steck-Zapfen $23_3$ fünf Vorsprünge $38_3$ und die Steck-Zapfen-Aufnahme $25_3$ entsprechend fünf Ausnehmungen $39_3$ aufweist. Die Ausgestaltung entspricht der nach den Fig. 7 und 8, so dass auf deren Beschreibung verwiesen werden kann. Die Bezugszeichen sind jeweils nur mit dem Index 3 versehen.

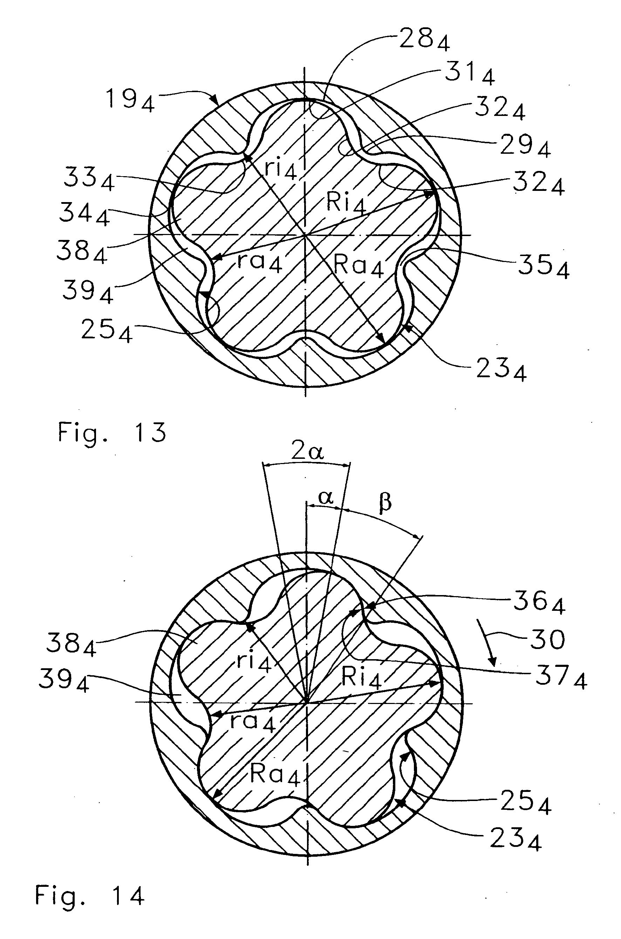

Auch für die Ausgestaltung nach Fig. 13 und 14 gilt: n = 5. Die Ausgestaltung entspricht ansonsten der nach den Fig. 9 und 10, wobei lediglich die Bezugsziffern mit dem Index 4 versehen sind.

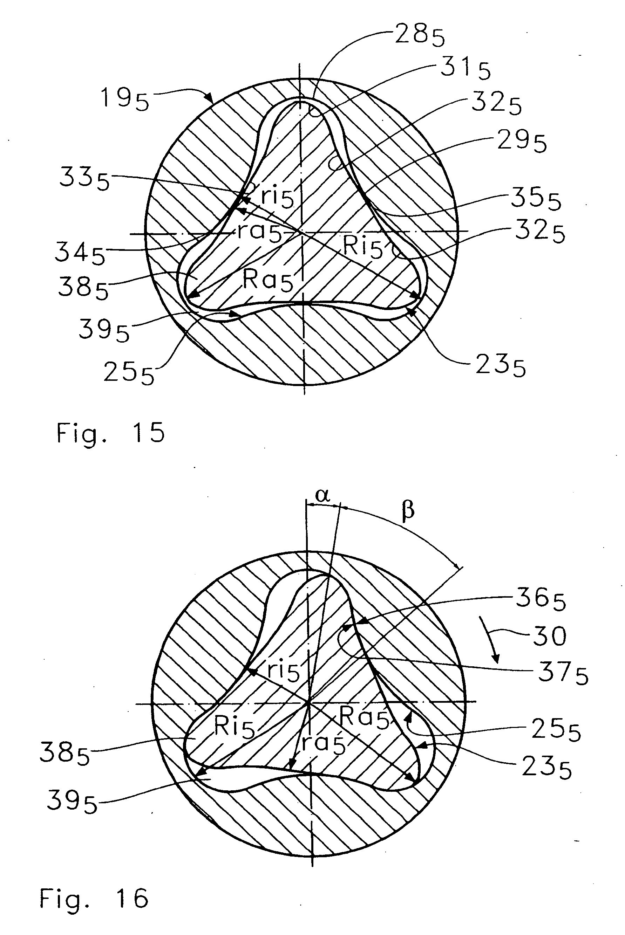

Bei der Ausgestaltung nach Fig. 15 und 16 gilt: n = 3. Für die Ausgestaltung der Vorsprünge $38_5$ und der zugehörigen Ausnehmungen $39_5$ gilt die Beschreibung

zu den Fig. 7 und 8 bzw. 11 und 12, nur dass den jeweiligen Bezugsziechen der Index 5 hinzugefügt worden ist.

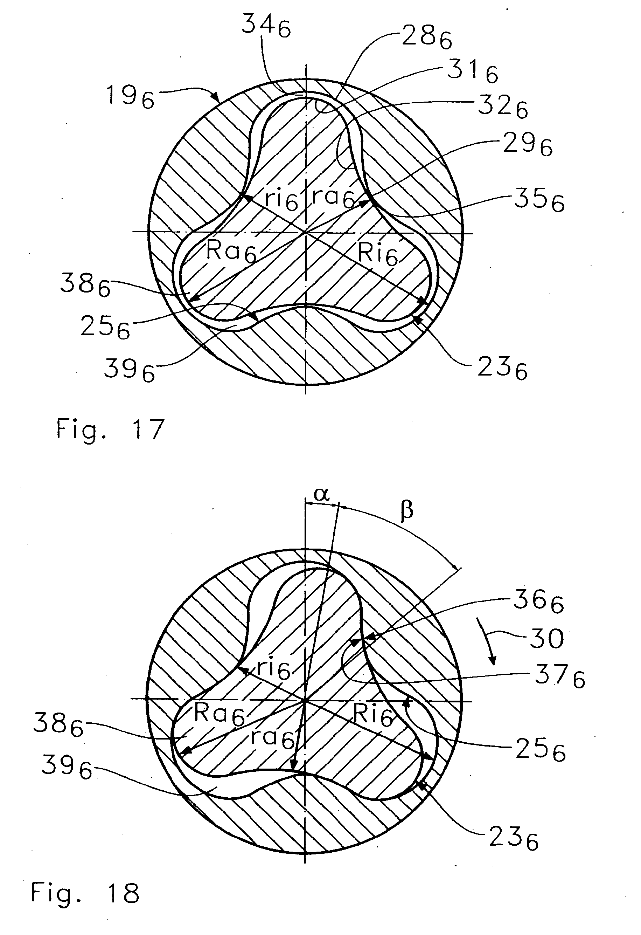

Für die Ausgestaltung nach den Fig. 17 und 18 gilt ebenfalls: n = 3 und ansonsten die Beschreibung zu den Fig. 9 und 10 bzw. 13 und 14, wobei lediglich dem jeweiligen Bezugszeichen der Index 6 hinzugefügt worden ist.

Wie nur in Fig. 4 und 5 dargestellt ist, ist der Fuß-Bereich 40 zwischen dem Steck-Zapfen 23 und dem zylindrischen Führungs-Abschnitt 22 abgerundet, so dass auch hier keine Ecke oder Knickstelle gebildet ist.

Wie die Zeichnungen erkennen lassen, gilt für den Schwenk-Winkel $\alpha$: $3° \leq \alpha \leq 35°$, wobei mit zunehmender Zahl von Vorsprüngen 38 und zugeordneten Ausnehmungen 39 der Winkel $\alpha$ kleiner wird, während er mit abnehmender Zahl von Vorsprüngen 38 und Ausnehmungen 39 größer werden kann.

Wie die Zeichnungen ebenfalls erkennen lassen, gilt für den Drehmoment-Übertragungs-Winkel $\beta$: $\beta \geq 5°$ und bevorzugt $\beta \geq 10°$ und besonders bevorzugt $\beta \geq 20°$. Auch hierbei gilt, dass der Winkel mit abnehmender Zahl von Vorsprüngen 38 der zugeordneten Ausnehmung 39, also mit abnehmendem n, größer wird. Weiterhin gilt grundsätzlich, dass der Anlagebereich zwischen den Drehmoment-Übertragungs-Flächen 36 und 37 im Vergleich zum Schwenk-Winkel $\alpha$ möglichst groß sein soll. Es gilt insofern $\alpha \leq \beta$ und bevorzugt $2\alpha \leq \beta$ und ganz besonders bevorzugt $3\alpha \leq \beta$.

Eine Demontage des Zellenrades 8 erfolgt in der Regel in der Weise, dass der der Drehmoment-Steck-Kupplung 21 gegenüberliegende Deckel 7 abgenommen und das Zellenrad 8 aus dem Gehäuse 1 herausgezogen wird. Aufgrund der abgerundeten Ausgestaltung der Umfangs-Abschnitte 31, 32 und 28, 29 können alle Steck-Zapfen 23 sehr leicht und gründlich gereinigt werden. Gleiches gilt für alle Steck-Zapfen-Aufahmen 25. Selbstverständlich ist es auch möglich, den Deckel 6 mit der Steck-Kupplung 21 abzuziehen.

## Patentansprüche

1. Zellenrad-Schleuse

     - mit einem Gehäuse (1),
     - mit einem im Gehäuse (1) ausgebildeten Innenraum (2),
     - mit einem in den Innenraum (2) mündenden Einlass (4),
     - mit einem aus dem Innenraum (2) ausmündenden Auslass (5),
     - mit Stirnseiten des Innenraums (2) abschließenden Deckeln (6, 7),
     - mit einem Zellenrad (8), das

         -- eine Mittel-Achse (3) aufweist,
         -- im Innenraum (2) angeordnet und
         -- in den Deckeln (6, 7) gelagert ist,

- mit einer einem Deckel (6) zugeordneten Drehantriebs-Einrichtung (17) für das Zellenrad (8) und
- mit einer Drehmoment-Steck-Kupplung (21) zwischen dem Zellenrad (8) und der Drehantriebs-Einrichtung (17), die

     -- einen Steck-Zapfen (23) mit mehreren in gleichen Winkelabständen angeordneten Vorsprüngen (38) mit ersten Drehmoment-Übertragungs-Flächen (37) und
     -- eine Steck-Zapfen-Aufnahme (25) mit mehreren in gleichen Winkelabständen ausgebildeten, je einen Vorsprung (38) aufnehmenden zur flächigen Anlage an den ersten Drehmoment-Übertragungs-Flächen (37) ausgebildeten zweiten Drehmoment-Übertragungs-Flächen (36) aufweist,

**dadurch gekennzeichnet,**

- **dass** die Ausnehmungen (39) der Steck-Zapfen-Aufnahme (25) jeweils einen Querschnitt aufweisen, der durch erste konkave Umfangs-Abschnitte (28) und diese jeweils miteinander verbindende erste konvexe Umfangs-Abschnitte (29) umgrenzt ist,

     -- wobei jeder erste konkave Umfangs-Abschnitt (28) und ein anschließender erster konvexer Umfangs-Abschnitt (29) jeweils zumindest teilweise eine *zweite* Drehmoment-ÜbertragungsFläche (36) bilden, und
     -- wobei der Maximal-Abstand (Ri) der ersten konkaven Umfangs-Abschnitte (28) von der Mittel-Achse (3) größer ist als der Minimal-Abstand (ri) der ersten konvexen Umfangs-Abschnitte (29) von der Mittel-Achse (3),

- **dass** die Vorsprünge (38) des Steck-Zapfens (23) jeweils einen Querschnitt aufweisen, der durch in die ersten konkaven Umfangs-Abschnitte (28) eingreifende erste konvexe Umfangs-Abschnitte (31) und sich hieran anschließende Umfangs-Verbindungs-Abschnitte (32, 33) gebildet ist,

     -- wobei jeder erste konvexe Umfangs-Abschnitt (31) und ein sich hieran anschließender Umfangs-Verbindungs-Abschnitt (32, 33) jeweils teilweise eine *erste* Drehmoment-Übertragungs-Fläche (37) bilden,

- **dass** die Vorsprünge (38) in den Ausnehmungen (39) in Umfangsrichtung (30) um einen vorgegebenen Schwenk-Winkel $\alpha$ aus einer Mittellage beidseitig verschwenkbar angeordnet sind,
- **dass** die ersten Drehmoment-Übertragungs-Flächen (37) und die zweiten Drehmoment-Übertragungs-Flächen (36) jeweils über einen Drehmoment-Übertragungs-Winkel β aneinander anliegen und
- **dass** für den Schwenk-Winkel α und den Drehmoment-Übertragungs-Winkel β gilt: α ≤ β.

2. Zellenrad-Schleuse nach Anspruch 1, **dadurch gekennzeichnet,**
**dass** die Umfangs-Abschnitte (28, 29 bzw. 31, 32, 33) stetig ohne Knickstelle ineinander übergehen.

3. Zellenrad-Schleuse nach Anspruch 1, **dadurch gekennzeichnet,**
**dass** die Umfangs-Verbindungs-Abschnitte (32, 33) des Steck-Zapfens (23) durch einen mittleren geradlinigen Umfangs-Abschnitt (33) und sich beidseitig hieran anschließende konkave Umfangs-Abschnitte (32) gebildet sind.

4. Zellenrad-Schleuse nach Anspruch 1, **dadurch gekennzeichnet,**
**dass** die Umfangs-Verbindungs-Abschnitte als konvexe Umfangs-Abschnitte (31) ausgebildet sind.

5. Zellenrad-Schleuse nach Anspruch 1, **dadurch gekennzeichnet,**
**dass** bei der Mittellage von Steck-Zapfen (23) und Steck-Zapfen-Aufnahme (25) zueinander zwischen den ersten konkaven UmfangsAbschnitten (28) ein erster Spalt (34) und zwischen dem ersten konvexen Umfangs-Abschnitt (29) und dem Umfangs-Verbindungs-Abschnitt (32, 33) ein zweiter Spalt (35) ausgebildet sind.

6. Zellenrad-Schleuse nach Anspruch 3 und 5, **dadurch gekennzeichnet,**
**dass** der erste Spalt (34) größer ist als der zweite Spalt (35).

7. Zellenrad-Schleuse nach Anspruch 4 und 5, **dadurch gekennzeichnet,**
**dass** der erste Spalt (34) kleiner ist als der zweite Spalt (35).

8. Zellenrad-Schleuse nach Anspruch 1, **dadurch gekennzeichnet,**
**dass** der Steck-Zapfen (23) mit einem abgerundeten Fuß-Bereich (40) versehen ist.

9. Zellenrad-Schleuse nach Anspruch 1, **dadurch gekennzeichnet,**
**dass** der Steck-Zapfen (23) an einem zylindrischen FührungsAbschnitt (22) ausgebildet ist, dem eine der Steck-Zapfen-Aufnahme (25) benachbarte angepasste zylindrische Aufnahme (24) zugeordnet ist.

10. Zellenrad-Schleuse nach Anspruch 1, **dadurch gekennzeichnet,**
**dass** für den Schwenk-Winkel α gilt: 3° ≤ α ≤ 35°.

11. Zellenrad-Schleuse nach Anspruch 1, **dadurch gekennzeichnet,**
**dass** für den Schwenk-Winkel α und den Drehmoment-Übertragungs-Winkel β gilt: 2α ≤ β und bevorzugt 3α ≤ β.

12. Zellenrad-Schleuse nach Anspruch 1, **dadurch gekennzeichnet,**
**dass** für den Drehmoment-Übertragungswinkel β gilt: β ≥ 5° und bevorzugt β ≥ 10° und besonders bevorzugt β ≥ 20°.

13. Zellenrad-Schleuse nach Anspruch 1 und 10, **dadurch gekennzeichnet,**
**dass** bei einer Zahl n der Vorsprünge (38) bzw. der zugehörigen Ausnehmungen für den Gesamtwinkel n β, in dem die zweiten Drehmoment-Übertragungs-Flächen (36) an den ersten Drehmoment-Übertragungs-Flächen (37) anliegen, gilt: n β ≤ 180° - n α.

## Claims

1. Cellular wheel sluice comprising

    - a housing (1),
    - an inner chamber (2) formed in the housing (1),
    - an inlet (4) opening into the inner chamber (2),
    - an outlet (5) exiting from the inner chamber (2),
    - with covers (6, 7) closing end faces of the inner chamber (2),
    - a cellular wheel (8)

        -- which comprises a middle axis (3),
        -- is arranged in the inner chamber (2) and
        -- is mounted in the covers (6, 7),

    - with a rotary drive device (17) for the cellular wheel (8) assigned to a cover (6) and

        -- with a torque insertion coupling (21) between the cellular wheel (8) and the rotary drive device (17) which comprises
        -- an insertion pin (23) with several projections (38) arranged at regular angular intervals with first torque transmitting faces (37) and
        -- an insertion pin holder (25) with several second torque transmitting faces (36) formed at regular angular intervals, each mounting a projection (38) for bearing flat against the first torque transmitting faces (37),

**characterised in that**

- the recesses (39) of the insertion pin holder (25) each have a cross section, which is surrounded by first concave circumferential sections (28) and the latter are surrounded respectively by connecting first convex circumferential sections (29),

-- wherein each first concave circumferential section (28) and adjoining first convex circumferential section (29) respectively form at least partly a *second* torque transmitting face (36), and
-- wherein the maximum distance (Ri) of the first concave circumferential section (28) from the middle axis (3) is greater than the minimal distance (ri) of the first convex circumferential sections (29) from the middle axis (3),

- **in that** the projections (38) of the insertion pin (23) have respectively a cross section which is formed by first convex circumferential sections (31) engaging in first concave circumferential sections (28) and adjoining circumferential connecting sections (32, 33),

-- wherein each first convex circumferential section (31) and an adjoining circumferential connecting section (32, 33) respectively form partly a *first* torque transmission face (37),

- **in that** the projections (38) in the recesses (39) in circumferential direction (30) are arranged pivotably on both sides about a given pivot angle $\alpha$ from a middle position,
- **in that** the first torque transmission faces (37) and the second torque transmission faces (36) bear on one another respectively via a torque transmission angle $\beta$ and
- **in that** for the pivot angle $\alpha$ and the torque transmission angle $\beta$: $\alpha \leq \beta$.

2. Cellular wheel sluice according to claim 1, **characterised in that** the circumferential sections (28, 29 or 31, 32, 33) pass into one another continuously without any bending.

3. Cellular wheel sluice according to claim 1, **characterised in that** the circumferential connecting sections (32, 33) of the insertion pin (23) are formed by a middle straight circumferential section (33) and concave circumferential sections (32) adjoining the latter on both sides.

4. Cellular wheel sluice according to claim 1, **charac-**

**terised in that** the circumferential connection sections are designed as convex circumferential sections (31).

5. Cellular wheel sluice according to claim 1, **characterised in that** in the middle position of insertion pin (23) and insertion pin holder (25) a first gap (34) is formed between the first concave circumferential sections (28) and between the first convex circumferential section (29) and the circumferential connecting section (32, 33) a second gap (35) is formed.

6. Cellular wheel sluice according to claim 3 and 5, **characterised in that** the first gap (34) is greater than the second gap (35).

7. Cellular wheel sluice according to claim 4 and 5, **characterised in that** the first gap (34) is smaller than the second gap (35).

8. Cellular wheel sluice according to claim 1, **characterised in that** the insertion pin (23) is provided with a rounded foot section (40).

9. Cellular wheel sluice according to claim 1, **characterised in that** the insertion pin (23) is formed on a cylindrical guiding section (22), to which section an adjusted cylindrical holder (24) adjacent to the insertion pin holder (25) is assigned.

10. Cellular wheel sluice according to claim 1, **characterised in that** for the pivot angle $\alpha$: $3° \leq \alpha \leq 35°$.

11. Cellular wheel sluice according to claim 1, **characterised in that** for the pivot angle $\alpha$ and the torque transmission angle $\beta$: $2\alpha \leq \beta$ and preferably $3\alpha \leq \beta$.

12. Cellular wheel sluice according to claim 1, **characterised in that** for the torque transmission angle $\beta$: $\beta \geq 5°$ and preferably $\beta \geq 10°$ and particularly preferably $\beta \geq 20°$.

13. Cellular wheel sluice according to claim 1 and 10, **characterised in that** with a number n of projections (38) and associated recesses for the total angle n $\beta$, in which the second torque transmitting faces (36) bear against the first torque transmitting faces (37): n $\beta \leq 180°$ - n $\alpha$.

**Revendications**

1. Sas à roue cellulaire

- avec un carter (1),
- avec un compartiment intérieur (2), réalisé dans le carter (1),

- avec une admission (4) débouchant dans le compartiment intérieur (2),
- avec une sortie (5) débouchant hors du compartiment intérieur (2),
- avec des couvercles (6, 7) fermant les faces frontales du compartiment intérieur (2),
- avec une roue cellulaire (8), qui

    -- comporte un axe médian (3)

    -- est disposée dans le compartiment intérieur (2) et

    -- est montée sur paliers dans les couvercles (6, 7),

- avec un dispositif d'entraînement en rotation (17), associé à un couvercle (6) et destiné à la roue cellulaire (8), et
- avec un accouplement enfichable pour transmission de couple (21) entre la roue cellulaire (8) et le dispositif d'entraînement en rotation (17), lequel comporte

    -- un tourillon à enficher (23) avec plusieurs saillies (38), disposées à même distance angulaire les unes des autres et munies de premières faces de transmission du couple (37), et

    -- un logement pour tourillon (25), muni de deuxièmes faces de transmission du couple (36), réalisées à même distance angulaire les unes des autres, recevant chacune une saillie (38), réalisées pour un appui plan sur les premières faces de transmission du couple (37),

**caractérisé**

- **en ce que** les évidements (39) du logement pour tourillon (25) ont chacun une section qui est délimitée par des premiers tronçons périphériques concaves (28) et des premiers tronçons périphériques convexes (29) reliant ces derniers les uns aux autres,

    -- chaque premier tronçon périphérique concave (28) et un premier tronçon périphérique convexe (29) adjacent formant chaque fois au moins partiellement une deuxième face de transmission du couple (36), et

    -- la distance maximum (Ri) entre les premiers tronçons périphériques concaves (28) et l'axe médian (3) étant supérieure à la distance minimum (ri) entre les premiers tronçons périphériques convexes (29) et l'axe médian (3),

- **en ce que** les saillies (38) du tourillon à enficher (23) ont chacune une section qui est formée par des premiers tronçons périphériques convexes (31), engagés dans les premiers tronçons périphériques concaves (28), et par des tronçons de jonction périphériques (32, 33) adjacents à ceux-ci,

    -- chaque premier tronçon périphérique convexe (31) et un tronçon de jonction périphérique (32, 33) adjacent à celui-ci formant chaque fois partiellement une première surface de transmission du couple (37),

- **en ce que** les saillies (38) sont disposées dans les évidements (39) de manière à pouvoir pivoter des deux côtés hors de la position médiane dans la direction circonférentielle (30) selon un angle de pivotement $\alpha$ prédéfini,

- **en ce que** les premières surfaces de transmission du couple (37) et les deuxièmes surfaces de transmission du couple (36) sont en appui les unes contre les autres en formant chaque fois un angle de transmission de couple $\beta$, et

- **en ce que** pour l'angle de pivotement $\alpha$ et l'angle de transmission du couple $\beta$, on applique $\alpha \leq \beta$.

2. Sas à roue cellulaire selon la revendication 1, **caractérisé en ce que** les tronçons périphériques (28, 29 et 31, 32, 33) se prolongent les uns dans les autres en continu sans brisure.

3. Sas à roue cellulaire selon la revendication 1, **caractérisé en ce que** les tronçons de jonction périphériques (32, 33) du tourillon à enficher (23) sont formés par un tronçon périphérique droit (33) central et par des tronçons périphériques concaves (32) adjacents à celui-ci des deux côtés.

4. Sas à roue cellulaire selon la revendication 1, **caractérisé en ce que** les tronçons de jonction périphériques sont réalisés sous la forme de tronçons périphériques convexes (31).

5. Sas à roue cellulaire selon la revendication 1, **caractérisé en ce que**, lorsque le tourillon à enficher (23) et le logement pour tourillon (25) sont en position médiane l'un par rapport à l'autre, il se forme une première fente (34) entre les premiers tronçons périphériques concaves (28), et une deuxième fente entre le premier tronçon périphérique convexe (29) et le tronçon de jonction périphérique (32, 33).

6. Sas à roue cellulaire selon les revendications 3 et 5, **caractérisé en ce que** la première fente (34) est plus grande que la deuxième fente (35).

7. Sas à roue cellulaire selon les revendications 4 et 5, **caractérisé en ce que** la première fente (34) est plus petite que la deuxième fente (35).

8. Sas à roue cellulaire selon la revendication 1, **caractérisé en ce que** le tourillon à enficher (23) est muni d'une zone de base (40) arrondie.

9. Sas à roue cellulaire selon la revendication 1, **caractérisé en ce que** le tourillon à enficher (23) est réalisé sur une portion de guidage (22) cylindrique, à laquelle est associé un logement (24) cylindrique adapté, adjacent au logement pour tourillon (25).

10. Sas à roue cellulaire selon la revendication 1, **caractérisé en ce que** pour l'angle de pivotement $\alpha$, on applique : $3° \le \alpha \le 35°$.

11. Sas à roue cellulaire selon la revendication 1, **caractérisé en ce que** pour l'angle de pivotement $\alpha$ et l'angle de transmission de couple $\beta$, on applique : $2\alpha \le \beta$, et de préférence $3\alpha \le \beta$.

12. Sas à roue cellulaire selon la revendication 1, **caractérisé en ce que** pour l'angle de transmission de couple $\beta$, on applique : $\beta \ge 5°$ et de préférence $\beta \ge 10°$ et encore mieux $\beta \ge 20°$.

13. Sas à roue cellulaire selon les revendications 1 et 10, **caractérisé en ce que**, avec un nombre n de saillies (38) et d'évidements associés, on applique pour l'angle total n $\beta$, dans lequel les deuxièmes surfaces de transmission du couple (36) sont en appui contre les premières surfaces de transmission du couple (37) : $n \beta \le 180° - n\alpha$.

Fig. 1

Fig. 2

Fig. 3

Fig. 4

Fig. 5

Fig. 6

Fig. 7

Fig. 8

Fig. 9

Fig. 10

Fig. 11

Fig. 12

14

Fig. 13

Fig. 14

Fig. 15

Fig. 16

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1099437 B
- GB 2123523 A
- DE 4206222 C2